# EUROPEAN PATENT APPLICATION

(11) **EP 3 337 243 A1**
(43) Date of publication of application: **20.06.2018**
(21) Application number: 16834860.5
(22) Date of filing: 02.06.2016
(51) Int. Cl.: H04W 48/08, H04W 48/18, H04W 88/06, H04W 36/28, H04W 76/16, H04W 36/14, H04W 84/12, H04W 36/00, H04W 76/10

(54) **BASE STATION DEVICE, COMMUNICATION DEVICE, CONTROL METHOD, AND PROGRAM**

(30) Priority: 11.08.2015 JP 2015159122
(71) Applicant: KDDI Corporation, Tokyo 163-8003 (JP)
(72) Inventor: PENG, Hailan, Fujimino-shi Saitama 356-8502 (JP); MORIWAKI, Kazuya, Fujimino-shi Saitama 356-8502 (JP); SUEGARA, Yasuhiro, Fujimino-shi Saitama 356-8502 (JP)
(74) Representative: Pitchford, James Edward
(86) International application number: PCT/JP2016/066330
(87) International publication number: WO 2017/026163

(57) **Abstract**

In a wireless communication system that includes a base station apparatus and one or more terminals capable of connecting to the base station apparatus in a first system and connecting to another apparatus in a second system, the base station apparatus: transmits, to the one or more terminals, a notification related to a permitted period for connecting to the another apparatus in the second system; when a terminal included among the one or more terminals has not been capable of communicating with the another apparatus in the second system over a term related to the permitted period, receives information indicating that the terminal has not been capable of performing communication in the second system from the terminal; and controls connection of the terminal in the second system in response to reception of the information from the terminal.

## Description

### TECHNICAL FIELD

The present invention relates to a base station apparatus, a communication apparatus, a control method, and a program, and specifically relates to a connection control technique in a wireless communication system in which different types of wireless communication techniques coexist.

### BACKGROUND ART

Today, in order to improve the system capacity and throughput in future wireless access networks, a method for using Long-Term Evolution (LTE) and a wireless LAN (WLAN) in coordination with each other has been studied (see NPL 1). With this method, a terminal performs communication by connecting to an access point (AP) on the WLAN side under control of a base station (eNB) on the LTE side (in response to an instruction from the eNB).

### CITATION LIST

### NON-PATENT LITERATURE

NPL 1: Intel et al., RP-150510, "LTE-WLAN Radio Level Integration and Interworking Enhancement," 3GPP, March 2015.

### SUMMARY OF INVENTION

### TECHNICAL PROBLEM

WLAN communication is performed on a contention basis. That is to say, there are cases where communication cannot be performed while another communication apparatus is performing communication. Therefore, even if an eNB has instructed a terminal to connect to a WLAN AP, a large amount of time may be required to establish the connection depending on the communication status on the WLAN side, or the connection may be impossible in the first place. Furthermore, even if the connection itself has been established, the difficulty in the actual signal transmission may result in an increase in a delay, and the throughput of a system as a whole could possibly be deteriorated instead of being improved.

The present invention provides a connection management technique for suppressing deterioration in communication performance in a case where different types of wireless systems are used in parallel.

### SOLUTION TO PROBLEM

A base station apparatus according to one aspect of the present invention is a base station apparatus in a wireless communication system that includes the base station apparatus and one or more terminals capable of connecting to the base station apparatus in a first system and connecting to another apparatus in a second system. The base station apparatus includes: transmission means for transmitting, to the one or more terminals, a notification related to a permitted period for connecting to the another apparatus in the second system; reception means for, when a terminal included among the one or more terminals has not been capable of communicating with the another apparatus in the second system over a term related to the permitted period, receiving information indicating that the terminal has not been capable of performing communication in the second system from the terminal; and control means for, in response to reception of the information from the terminal included among the one or more terminals, controlling connection of the terminal in the second system.

Furthermore, a communication apparatus according to another aspect of the present invention is a communication apparatus that is included among one or more communication apparatuses and included in a wireless communication system that includes a base station apparatus and the one or more communication apparatuses, the one or more communication apparatuses being capable of connecting to the base station apparatus in a first system and connecting to another apparatus in a second system. The communication apparatus includes: obtainment means for obtaining, from the base station apparatus, information related to a permitted period related to communication with the another apparatus in the second system; determination means for determining whether communication with the another apparatus in the second system has failed based on the information related to the permitted period; and transmission means for, when it is determined that the communication with the another apparatus in the second system has failed, transmitting information indicating that the communication with the another apparatus has failed to the base station apparatus. The base station apparatus controls connection of the communication apparatus in the second system based on the information transmitted from the transmission means.

### ADVANTAGEOUS EFFECTS OF INVENTION

The present invention can suppress deterioration in communication performance in a case where different types of wireless systems are used in parallel.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate an embodiment of the present invention, and together with a description thereof, serve to explain the principles of the present invention.
FIG. 1 is a diagram showing an overview of an exemplary configuration and a processing flow of a wireless communication system.
FIG. 2 is a diagram showing exemplary hardware components of a base station apparatus and a wireless terminal.
FIG. 3 is a block diagram showing exemplary functional components of the base station apparatus.
FIG. 4 is a block diagram showing exemplary functional components of the wireless terminal.
FIG. 5 is a diagram showing a flow of processing executed between the base station apparatus and the wireless terminal.
FIG. 6 is a diagram showing a flow of processing executed between the base station apparatus and the wireless terminal.

### DESCRIPTION OF EMBODIMENTS

The following describes an embodiment of the present invention in detail with reference to the accompanying drawings.

### (Wireless Communication System)

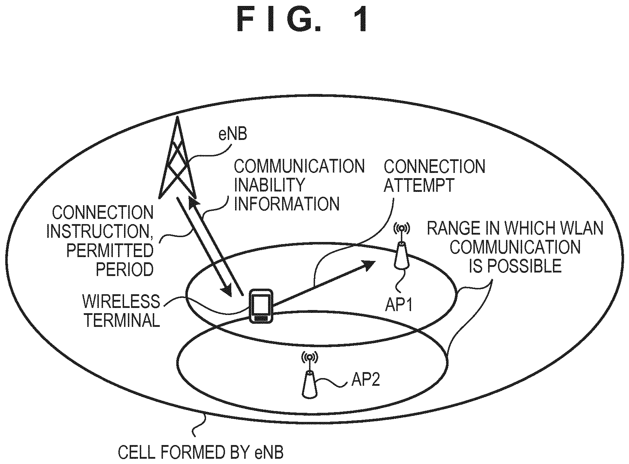

FIG. 1 shows an exemplary configuration of a wireless communication system according to the present embodiment. The present wireless communication system is composed of, for example, a base station apparatus (eNB) of Long-Term Evolution (LTE), wireless LAN access points (APs), and a wireless terminal. Note that the base station apparatus may be, for example, a base station apparatus of other wireless communication standards, such as a mobile telephone of a generation before LTE, and the APs may similarly be communication apparatuses compliant with any wireless communication standard. Also note that wireless LANs may use, for example, a frequency band of 2.4 GHz, 5.2 GHz, 5.3 GHz, or 5.6 GHz, or may use, for example, a millimeter band or a quasi-millimeter band, such as a 60-GHz band. It will be assumed that the base station apparatus and the APs are compliant with different wireless communication methods, and the base station apparatus performs first wireless communication with the wireless terminal, whereas the APs perform second wireless communication that is different from the first wireless communication with the wireless terminal. Although the example of FIG. 1 shows one base station apparatus, two access points, and one wireless terminal, no limitation is intended in this regard, and a plurality of base station apparatuses, one or at least three access points, and a plurality of wireless terminals can exist.

Furthermore, although it will be assumed below that the wireless terminal that connects to the cellular base station apparatus (the eNB of LTE) further attempts to connect to a wireless LAN AP, no limitation is intended in this regard. The following discussion can be applied to a system in which a first communication apparatus in an arbitrary first system that leads communication control connects to a wireless terminal, and the wireless terminal further attempts to connect to a second communication apparatus in an arbitrary second system in response to an instruction from the first communication apparatus. At this time, it will be assumed that the second system is, for example, a system that performs contention-based communication, and a communication apparatus within the system determines that it cannot perform communication when another communication apparatus is using the same frequency band. Note that any system may be used as the second system as long as it is a system that does not guarantee communication opportunities of the wireless terminal.

In the wireless communication system according to the present embodiment, the wireless terminal attempts to connect to an AP based on connection control executed by the eNB. That is to say, the eNB of LTE executes connection control in a wireless LAN associated with the wireless terminal connected to the eNB. After the establishment of connection in the wireless LAN, the wireless terminal can perform communication with the eNB and the AP concurrently. Here, this concurrent communication can be performed in line with Dual Connectivity of LTE. For example, user data to be transmitted to the wireless terminal is transferred from the eNB of LTE to the wireless LAN AP, and the AP transmits the transferred data to the wireless terminal. Although the wireless terminal searches for the AP that, for example, has been designated by the eNB or exists around the wireless terminal prior to connection to the AP, a description of the details thereof will be omitted in the present embodiment. The wireless terminal attempts to establish connection to the AP that has been discovered through the search; however, when, for example, it has detected signal transmission by another communication apparatus using the same frequency (channel), it cannot establish connection. Similarly, even after the establishment of connection, the wireless terminal cannot transmit and receive signals when it has detected signal transmission by another communication apparatus. If this extends a term in which communication cannot be performed, it may be difficult to sufficiently secure a delay period or the quality of throughput and the like in communication of the wireless terminal, and the eNB could possibly have difficulty performing connection management for the wireless terminal.

In contrast, in the present embodiment, as a measure against the extension of the term in which communication cannot be performed, the wireless terminal gives notification to the eNB when a term in which connection cannot be established or communication cannot be performed has exceeded a predetermined length. Then, the wireless terminal suggests the eNB to execute some kind of connection control in the wireless LAN of the wireless terminal. This notification enables the eNB to instruct the wireless terminal to, for example, suspend the attempt made by the wireless terminal to connect to the wireless LAN AP, change the destination of the attempted connection to another AP, cut off the connection to the currently-connected AP, or switch from the currently-connected AP to another AP. Here, the eNB can also control the aforementioned predetermined length. For example, the eNB can notify the wireless terminal, in advance, of information related to a permitted period that can be permitted as a term in which connection cannot be established or communication cannot be performed as the aforementioned predetermined length.

In a case where the eNB notifies the wireless terminal of the information related to the permitted period, should the term that can be permitted changes depending on the situation, the permitted period corresponding to such a term can be set. Note that the "term" here may be determined based on an actual period, or may be determined based on the number of connection or communication attempts. Therefore, the eNB can notify the wireless terminal of information of a permitted value related to at least one of a temporal term and the number of connection or communication attempts as the aforementioned information of the permitted period. Note that the information of the permitted period can be, but is not limited to, information that directly presents the aforementioned permitted value. For example, the eNB may notify the wireless terminal of a value of, for example, an index corresponding to the information of the permitted value of which the wireless terminal should be notified by sharing, in advance, a correspondence relationship between values of, for example, indexes and permitted values with the wireless terminal.

Note that a notification of the information related to the permitted period by the eNB can be transmitted as, for example, a signal for connection control that is individually transmitted to each wireless terminal, such as a radio resource control (RRC) message. This is useful when the permitted period is desired to be finely set for each wireless terminal. For example, when the eNB has received from the wireless terminal a report indicating that an AP designated by the eNB itself has been discovered, the eNB transmits an RRC Connection Reconfiguration message for establishing connection to the AP via a wireless LAN to the wireless terminal. At this time, through this RRC message, the eNB can give notification of the aforementioned information related to the permitted period together with the aforementioned instruction for establishing connection. Furthermore, the eNB may give notification of the aforementioned information related to the permitted period prior to this RRC message for establishing connection via the wireless LAN. For example, the information related to the permitted period may be transmitted together with information designating an AP to be searched for by the wireless terminal; at this time, the RRC message may give notification of the same, or a signal that is individually transmitted to each wireless terminal and is other than the RRC message may give notification of the same. Note that in this case, the wireless terminal obtains the aforementioned information related to the permitted period from a signal addressed to itself, measures a period that has elapsed without the actual establishment of connection to an AP since a connection attempt was started (the number of attempts), and determines whether the measured value has reached the permitted value.

Furthermore, a notification of the information related to the permitted period may be broadcast to all of wireless terminals under control of the eNB using, for example, an SIB (System Information Block) and the like. This is useful in that a plurality of wireless terminals can be notified of the information related to the permitted period using a small amount of wireless resources when, for example, the same permitted period can be applied with respect to all wireless terminals existing within a cell deployed by the eNB. At this time, the eNB can transmit an instruction for starting a connection attempt to each wireless terminal individually through an RRC message and the like after the wireless terminals are notified of the information related to the permitted period. In this case, after the notification of the information related to the permitted period is given, a nearby AP that has been discovered by a wireless terminal through the search is reported to the eNB, and the eNB can transmit an instruction for connecting to the discovered AP to the wireless terminal in response to the report. Note that, similarly to the aforementioned RRC message, the notification of the information related to the permitted period may be given after the search for an AP by the wireless terminals rather than before the search. That is to say, it is sufficient for the wireless terminals to obtain the information related to the permitted period before starting processing for connecting to an AP, and this information may be obtained either before or after the timings of the search for and discovery of an AP. Note that the eNB may issue an instruction for connecting to an AP at the same time to all wireless terminals under control of itself; in this case, the connection instruction may be transmitted using a broadcast signal, such as an SIB. Therefore, in this case, the instruction for connecting to an AP and the information of the permitted period may be transmitted at a time using the broadcast signal.

When the wireless terminal determines that a measured period has reached the permitted period, it determines that the establishment of connection to an AP to be connected failed and communication with that AP failed. Similarly, when a term in which signals cannot be transmitted to and received from an AP has reached the permitted period after the establishment of connection to that AP, the wireless terminal determines that communication with that AP failed. Note that in a case where the information related to the permitted period of which the wireless terminal has been notified is related to the number of attempts, the wireless terminal can determine that communication with an AP to be connected failed when the number of actual attempts for the establishment of connection to that AP or for signal transmission and reception (communication) with that AP has exceeded the number of attempts of which the wireless terminal has been notified. When the wireless terminal determines that communication with an AP designated by the eNB failed, it gives notification to that effect to the eNB.

In this way, when the eNB of LTE executes connection control in a wireless LAN, for example, an instruction for cutting of the connection can be issued to the eNB. Note that at this time, the eNB can instruct the wireless terminal to establish connection to still another AP. Furthermore, when the wireless terminal determines that communication with an AP designated by the eNB failed, it may actively switch to connection to another AP that is different from the designated AP. In this case, for example, the eNB may instruct the wireless terminal to start the search and connection to a designation of another AP, or may obtain information of other APs connectable to the wireless terminal and transmit a connection instruction to the wireless terminal with a designation of one of the connectable APs. Furthermore, the wireless terminal may autonomously attempt to connect to another AP, and notify the eNB of a result of the attempt. For example, after establishing connection to another AP, the wireless terminal may notify the eNB of the establishment of connection, and cause the eNB to configure settings to perform data communication via that AP. Note that at this time, the eNB may designate, in advance, a plurality of APs that can be autonomously selected by the wireless terminal, and execute control so that the wireless terminal connects to one of these APs. For example, with respect to WLAN Terminals (WTs) placed between APs and the eNB, one or more APs connected to one WT may be put into one group, and the eNB can designate one or more APs belonging to that group by designating that group. In this case, upon establishment of connection to the wireless terminal and one of the APs in the group, the eNB can transfer data to an AP that is connected to the wireless terminal via the same WT.

Below is a detailed description of the components of a base station apparatus and a wireless terminal that execute the foregoing processing, and a flow of the processing executed by these components.

### (Hardware Components of Base Station Apparatus and Wireless Terminal)

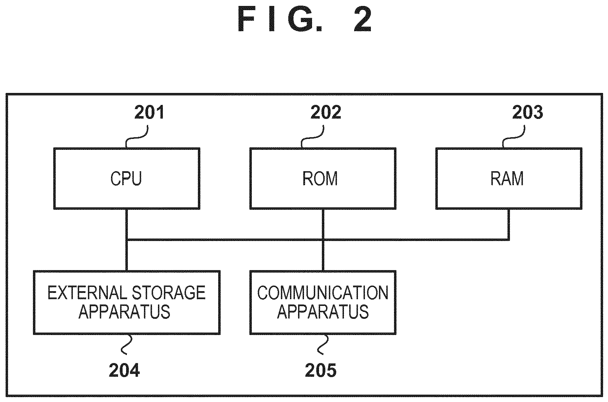

FIG. 2 shows exemplary hardware components of the base station apparatus and the wireless terminal. In one example, the base station apparatus and the wireless terminal include hardware components similar to those shown in FIG. 2; for example, they include a CPU 201, a ROM 202, a RAM 203, an external storage apparatus 204, and a communication apparatus 205. In the base station apparatus and the wireless terminal, the CPU 201 executes programs that are recorded in, for example, one of the ROM 202, RAM 203, and external storage apparatus 204 and realize the aforementioned various functions of the base station apparatus and the wireless terminal.

The base station apparatus and the wireless terminal, for example, control the communication apparatus 205 using the CPU 201 to perform communication between the base station apparatus (and a wireless LAN AP) and the wireless terminal. Furthermore, the base station apparatus, for example, controls the communication apparatus 205 using the CPU 201 to perform communication between the base station apparatus and an AP. Although it is assumed in FIG. 2 that the base station apparatus and the wireless terminal have one communication apparatus 205, no limitation is intended in this regard. For example, the base station apparatus may include a communication apparatus for communication between the base station apparatus and an AP, and a communication apparatus for the wireless terminal. Furthermore, the wireless terminal includes, for example, a communication apparatus for cellular use and a communication apparatus for wireless LAN use.

Note that the base station apparatus and the wireless terminal may include dedicated hardware that executes various functions; some parts may be executed by hardware, and other parts may be executed by a computer that causes programs to operate. Furthermore, all the functions may be executed by the computer and programs.

### (Functional Components of Base Station Apparatus)

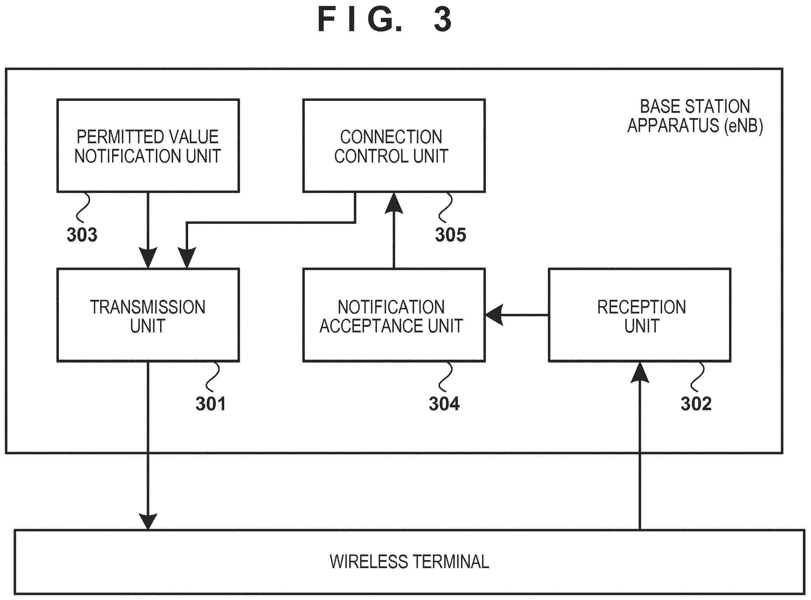

FIG. 3 shows exemplary functional components of the base station apparatus (eNB). As mentioned earlier, although the eNB is, for example, a base station apparatus of LTE, it can be any communication apparatus that can, in a wireless communication system other than LTE, control connection between a wireless terminal connected to the communication apparatus and another apparatus in another wireless communication system. The eNB includes, for example, a transmission unit 301, a reception unit 302, a permitted value notification unit 303, a notification acceptance unit 304, and a connection control unit 305 as its functional components. Note that the eNB can communicate with, for example, another eNB or communicate with, for example, a wireless LAN AP via a WLAN Terminal (WT). However, it will be assumed here that only processing between a wireless terminal and the eNB will be focused on, and functions other than those related to such processing, such as inter-eNB communication and communication between the eNB and an AP, for example, will be omitted from the description and drawings.

The transmission unit 301 transmits wireless signals to the wireless terminal, and the reception unit 302 receives wireless signals from the wireless terminal. Here, the wireless signals transmitted from the base station apparatus to the wireless terminal can include, for example, signals targeted at one wireless terminal, signals targeted at a plurality of wireless terminals, or signals targeted at all wireless terminals. On the other hand, the wireless signals transmitted from the wireless terminal to the base station apparatus are signals addressed to the base station apparatus.

The permitted value notification unit 303 controls the transmission unit 301 so as to notify the wireless terminal of information related to a permitted period of a term between the start of an attempt for connection to an AP discovered by the wireless terminal and the establishment of the connection, or a term in which signal transmission and reception cannot be performed. Here, as mentioned earlier, the information related to the permitted period may be a permitted value of a time length of a period in which communication cannot be performed, or a permitted value of the number of connection attempts or the number of communication attempts. Furthermore, both of these permitted values may be included in the information related to the permitted period. In this case, for example, the wireless terminal can determine that communication with the AP failed at one of the following timings that comes first: when the term in which communication cannot be performed exceeds the permitted value of the time length, and when the number of connection or communication attempts exceeds the corresponding permitted value. Furthermore, the information related to the permitted period may be set separately for the term between the start of the attempt for connection to the AP discovered by the wireless terminal and the establishment of the connection, and for the term in which signal transmission and reception cannot be performed. That is to say, the permitted period until the establishment of the connection may be different from the permitted period related to the term in which communication cannot be performed after the connection. Note that after the establishment of the connection to the AP, the wireless terminal may be notified of the permitted period related to the term in which communication cannot be performed after the connection.

The permitted value notification unit 303 controls the transmission unit 301 to transmit information of the permitted value before the wireless terminal connects to the AP. For example, when the connection control unit 305 transmits an instruction for connecting to the AP to the wireless terminal via the transmission unit 301, the permitted value notification unit 303 can control the transmission unit 301 to transmit the information of the permitted value simultaneously (e.g., in the same signals). Furthermore, the permitted value notification unit 303 may first cause the transmission unit 301 to transmit the information of the permitted value, and thereafter, the connection control unit 305 may control the transmission unit 301 to transmit another signal including a connection instruction to the wireless terminal. A notification at this time can be transmitted to the wireless terminal, for example, via a signal that is transmitted to each wireless terminal, such as an RRC message, or via a broadcast signal, such as an SIB.

The notification acceptance unit 304 obtains, via the reception unit 302, a notification that is transmitted from the wireless terminal in a case where communication cannot be performed with the AP for a period longer than the permitted period of which the wireless terminal was notified by the permitted value notification unit 303. Here, the case where communication cannot be performed includes a case where the establishment of connection failed for the period longer than the permitted period even though a connection attempt was started, and a case where signal transmission and reception failed for the period longer than the permitted period after the establishment of the connection. Upon accepting the notification, the notification acceptance unit 304 gives notification to that effect to the connection control unit 305.

The connection control unit 305 controls connection between the wireless terminal and the AP. For example, when the wireless terminal communicates with both of the eNB and the AP concurrently (when carrier aggregation using both of LTE and a wireless LAN is started), the connection control unit 305 instructs the wireless terminal to search for the AP. Here, as mentioned earlier, the connection control unit 305 can set, for example, (at least one) AP to be searched for, a frequency to be used in the search, and information of a threshold related to a received power as search conditions, and notify the wireless terminal of the search conditions. The wireless terminal searches for an AP that satisfies these search conditions. Note that when there is no instruction from the connection control unit 305, the wireless terminal can actively search for the AP and notify the eNB of a result of the search. For example, the wireless terminal may periodically measure the AP and transmit a resultant report to the eNB. In this case, the connection control unit 305 need not cause the transmission unit 301 to transmit an AP search instruction to the wireless terminal. Upon accepting a notification indicating that the AP has been discovered from the wireless terminal, the connection control unit 305 causes the transmission unit 301 to transmit an instruction for establishing connection to the discovered AP to the wireless terminal. Note that after the establishment of the connection between the wireless terminal and the AP, the eNB transfers user data to the AP and causes the AP to transmit user data to the wireless terminal, and the AP accepts the transfer of the data received from the wireless terminal. This enables the wireless terminal to perform communication using LTE and a wireless LAN concurrently under control of the eNB.

Upon receiving a notification from the notification acceptance unit 304, the connection control unit 305 further transmits, to the wireless terminal via the transmission unit 301, an instruction for stopping (cutting off) the connection to the AP with which the wireless terminal is currently making a connection attempt or to which the wireless terminal is currently connected, for example. In addition, upon receiving a notification from the notification acceptance unit 304, the connection control unit 305 may further transmit, to the wireless terminal via the transmission unit 301, an instruction for changing a connection destination from the AP with which the wireless terminal is currently making a connection attempt or to which the wireless terminal is currently connected to another AP, for example. Note that when cutting off the connection between the wireless terminal and the AP or switching from that connection to connection between the wireless terminal and another AP, the connection control unit 305 can transmit an instruction for stopping (cutting off) the connection to the AP serving as the current connection destination. When switching from the connection between the wireless terminal and the AP to connection between the wireless terminal and another AP, the connection control unit 305 similarly controls the AP serving as a switchover destination so that this AP transmits user data to the wireless terminal. Note that this instruction can be given via a communication interface for performing communication with the non-illustrated AP (or a WT placed between that AP and the eNB) using at least one of a wired network and a wireless network.

In the foregoing manner, the eNB notifies the wireless terminal of information related to a period that can be permitted in establishing connection between the wireless terminal and an AP, or a period in which the inability to perform communication can be permitted. When the establishment of the connection failed or signal transmission and reception failed over the permitted period, the eNB receives information indicating that communication failed from the wireless terminal. Upon receiving such information, the eNB executes connection control in a wireless LAN of the wireless terminal by, for example, stopping the connection between the wireless terminal and the AP or switching to connection between the wireless terminal and another AP.

### (Components of Wireless Terminal)

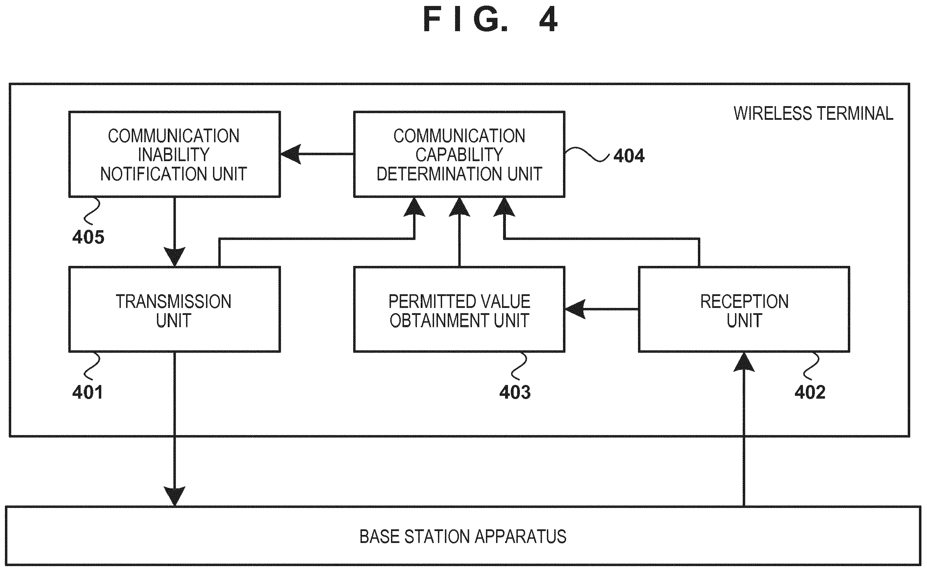

FIG. 4 shows exemplary functional components of a wireless terminal. As mentioned earlier, although the wireless terminal is, for example, a communication apparatus that can perform communication via LTE and a wireless LAN concurrently, it can be any communication apparatus that can, under control of a wireless communication system other than LTE and a wireless LAN, communicate with another apparatus in still another wireless communication system. The wireless terminal includes, for example, a transmission unit 401, a reception unit 402, a permitted value obtainment unit 403, a communication capability determination unit 404, and a communication inability notification unit 405 as its functional components. Although the wireless terminal can communicate with a wireless LAN AP, it will be assumed here that only processing between the wireless terminal and the eNB will be focused on, and functions other than those related to such processing will be omitted from the description and drawings.

The transmission unit 401 transmits wireless signals to the eNB, and the reception unit 402 receives wireless signals from the eNB. Here, the wireless signals transmitted from the eNB to the wireless terminal can include, for example, signals targeted at one wireless terminal, signals targeted at a plurality of wireless terminals, or signals targeted at all wireless terminals. On the other hand, the wireless signals transmitted from the wireless terminal to the eNB are signals addressed to the eNB.

The permitted value obtainment unit 403 obtains a permitted value related to a permitted period from the permitted value notification unit 303 of the eNB via the reception unit 402.

Based on the obtained permitted value, the communication capability determination unit 404 determines whether an elapsed period since the start of an attempt to establish connection to an AP exceeds the permitted value, or whether a term in which communication cannot be performed after the establishment of connection to the AP exceeds the permitted value. The communication capability determination unit 404 may evaluate the elapsed period since the start of the attempt to establish connection to the AP based on, for example, an elapsed period since reception of an instruction for connecting to the AP from the eNB. Furthermore, the communication capability determination unit 404 can specify a term in which signals can be neither transmitted nor received by monitoring the transmission unit 401 and the reception unit 402, and determine a term in which communication cannot be performed based on a result of the specification. Note that as mentioned earlier, the communication capability determination unit 404 may determine the inability to communicate with the AP over the permitted period based on the number of attempts to establish connection or the number of communication attempts after the establishment of connection. Also note that a case where communication cannot be performed after the establishment of connection includes not only a case where signals cannot be transmitted due to signal transmission by another communication apparatus, but also a case where signal reception keeps being unsuccessful due to, for example, the continuous occurrence of an irrecoverable error in received signals.

When the communication capability determination unit 404 determines that the term in which communication cannot be performed with the AP exceeds the permitted period, the communication inability notification unit 405 controls the transmission unit 401 so as to give notification to that effect to the eNB. Note that when the communication capability determination unit 404 determines that the term in which communication cannot be performed with the AP exceeds the permitted period, the communication inability notification unit 405 can notify the eNB of the occurrence of Radio Link Failure in the wireless LAN.

### (Flow of Processing)

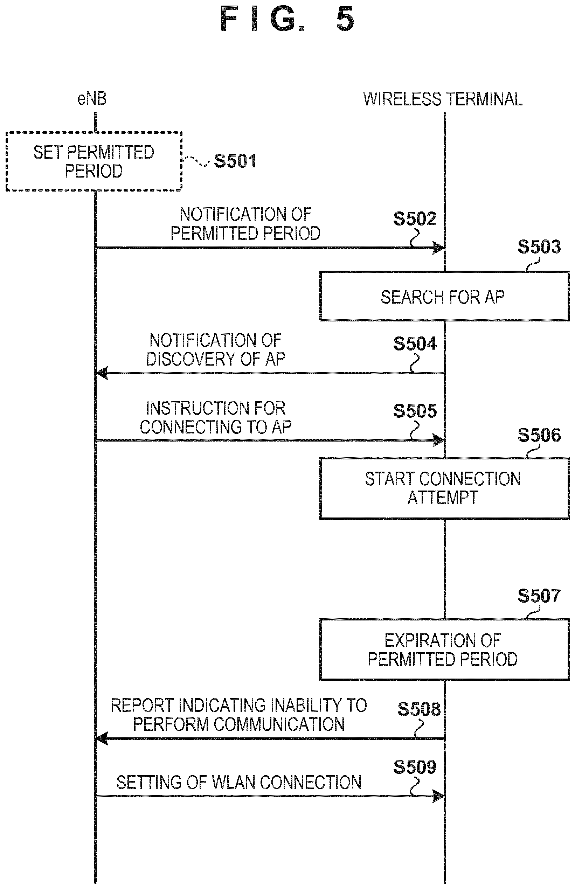

FIG. 5 shows an example of a flow of processing executed by the foregoing eNB and wireless terminal. The following description pertains to an exemplary case where the wireless terminal notifies the eNB of the inability to perform communication (the occurrence of Radio Link Failure) because connection has not been established even with the elapse of the permitted period since the start of the attempt for connection to an AP. Although not described below, similar processing can be applied also after the establishment of connection. That is to say, when a term in which signal transmission and reception cannot be performed has exceeded the permitted period after the establishment of connection, the wireless terminal notifies the eNB of the inability to perform communication so as to prompt the eNB to execute connection control in the wireless LAN.

In the present processing, first, the eNB sets the permitted period for the wireless terminal to establish connection to an AP, or the permitted period related to the term in which communication cannot be performed after the establishment of connection (step S501). Note that this setting may be configured in advance; for example, it may be configured in advance by an LTE carrier. Thereafter, the eNB notifies the wireless terminal of the set permitted period (step S502). At this or another timing, the eNB also instructs the wireless terminal to search for an AP. Note that the eNB may give notification of the permitted period using a signal that is individually transmitted to the wireless terminal, such as an RRC message, or using a broadcast signal, such as an SIB. Furthermore, the notification of the permitted period may be included in a signal of the instruction for searching for an AP, or may be transmitted as another signal. Note that the signal of the instruction for searching for an AP need not necessarily be transmitted. That is to say, the wireless terminal may, for example, search for an AP therearound and notify the eNB of the AP at a predetermined cycle.

Thereafter, the wireless terminal searches for a wireless LAN AP (step S503), and notifies the eNB of a discovered AP (step S504). Upon receiving a report indicating the discovery of the AP, the eNB transmits, to the wireless terminal, an instruction for making an attempt to connect to that AP (step S505). Note that at this time, the eNB can transmit an instruction for performing communication with the wireless terminal also to the discovered AP. This is an instruction for the eNB to control communication on the wireless LAN side. Then, in response to this instruction, the wireless terminal starts the attempt for connection to the AP (step S506). At this time, the wireless terminal measures an elapsed period since the start of the connection attempt using, for example, a timer and the like. The wireless terminal also counts the number of connection attempts using, for example, a counter and the like. Assume that the connection has not been completed thereafter even with the elapse of the permitted period (step S507). Then, the wireless terminal notifies the eNB of the inability to perform communication with the AP (step S508). In response to this notification, the eNB controls connection between the AP and the wireless terminal so as to, for example, stop the attempt for connection to the AP (step S509). For example, the eNB transmits an instruction for invalidating a connection destination to the wireless terminal, and also transmits a signal indicating that communication will not be performed between the AP and the wireless terminal to the AP. Note that when it is determined that communication cannot be performed with the AP, the wireless terminal may autonomously stop the attempt for connection to the AP; in this case, the instruction from the eNB may be omitted. Note that in this case also, the eNB executes connection control on the wireless LAN side by, for example, notifying the AP that was intended to serve as the connection destination of the fact that communication will not be concurrently performed between the wireless terminal and the eNB and the AP. Furthermore, the eNB may transmit, to the wireless terminal, a signal of an instruction for switching the AP serving as the connection destination.

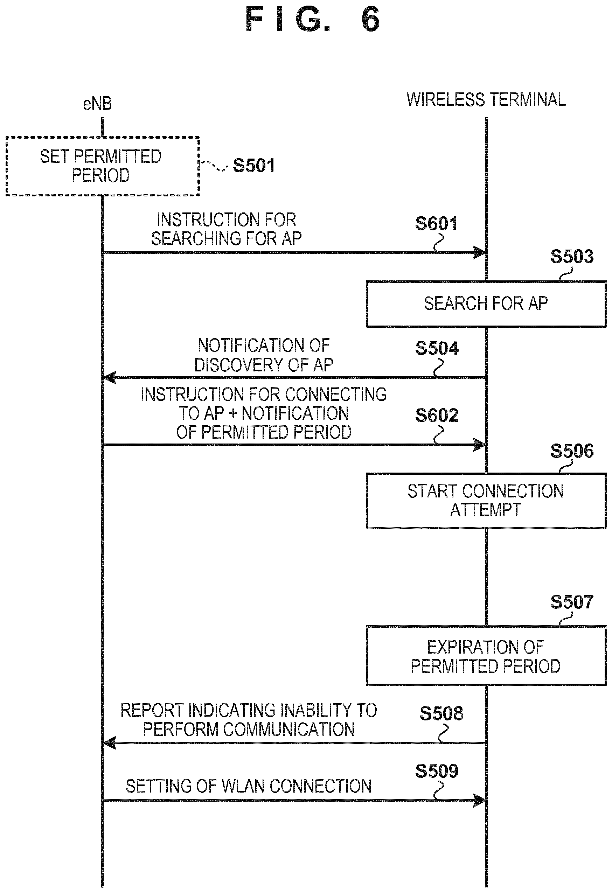

FIG. 6 shows another example of a flow of processing executed by the foregoing eNB and wireless terminal. The present example differs from FIG. 5 in the timing for giving notification of the permitted period, and parts of the processing are similar to FIG. 5. Therefore, the same reference numerals are given to processes that overlap those of FIG. 5, and a description of such processes will be omitted.

In the present example, the wireless terminal searches for an AP before it is notified of the permitted period. Therefore, first, the eNB transmits an instruction for searching for an AP to the wireless terminal (step S601). Note that a signal of the instruction for searching for an AP need not necessarily be transmitted. That is to say, the wireless terminal may, for example, search for an AP therearound and notify the eNB of the AP at a predetermined cycle. Thereafter, the wireless terminal reports the AP search and a discovered AP to the eNB. Then, the eNB transmits an instruction for connecting to the discovered AP to the wireless terminal. At this time, the eNB transmits information of the permitted period to the wireless terminal in addition to the instruction for connecting to the AP (step S602). Note that the information of the permitted period may be included in the signal of the instruction for connecting to the AP, or may be transmitted using another signal. Also note that the information of the permitted period is transmitted before the wireless terminal starts an attempt for connection to the AP. In some cases, the wireless terminal may be notified of the information of the permitted period before the connection attempt ends, that is to say, before the elapse of the permitted period since the start of the connection attempt. As subsequent processes are similar to those of FIG. 5, a description thereof will be omitted.

Through the foregoing configurations and processing, the eNB can be prevented from becoming incapable of managing, for example, the throughput and delay characteristics related to the wireless terminal because the wireless terminal cannot communicate with the AP. As a result, the throughput and other quality performances of a system as a whole can be improved.

The present invention is not limited to the above embodiment and various changes and modifications can be made within the spirit and scope of the present invention. Therefore, to apprise the public of the scope of the present invention, the following claims are made.

This application claims priority from Japanese Patent Application No. 2015-159122, filed August 11, 2015, which is hereby incorporated by reference herein in its entirety.

## Claims

1. A base station apparatus in a wireless communication system that includes the base station apparatus and one or more terminals capable of connecting to the base station apparatus in a first system and connecting to another apparatus in a second system, the base station apparatus comprising:
transmission means for transmitting, to the one or more terminals, a notification related to a permitted period for connecting to the another apparatus in the second system;
reception means for, when a terminal included among the one or more terminals has not been capable of communicating with the another apparatus in the second system over a term related to the permitted period, receiving information indicating that the terminal has not been capable of performing communication in the second system from the terminal; and
control means for, in response to reception of the information from the terminal included among the one or more terminals, controlling connection of the terminal in the second system.

2. The base station apparatus according to claim 1, wherein
the transmission means transmits the notification using a signal that instructs each of the one or more terminals to connect to another terminal.

3. The base station apparatus according to claim 2, wherein
the transmission means transmits the signal to a terminal included among the one or more terminals after the terminal has discovered, through a search, the another apparatus in the second system.

4. The base station apparatus according to claim 1, wherein
the transmission means transmits the notification using a signal that is broadcast to all of the one or more terminals.

5. The base station apparatus according to claim 4, wherein
when a terminal included among the one or more terminals has discovered, through a search, the another apparatus in the second system after the transmission of the notification, the transmission means further transmits a signal that instructs the terminal to connect to the discovered another apparatus.

6. The base station apparatus according to any one of claims 1 to 5, wherein
the control executed by the control means includes transmission of a signal for stopping connection between the terminal that has transmitted the information and the another apparatus with which the terminal has not been capable of communicating in response to reception of the information by the reception means.

7. The base station apparatus according to any one of claims 1 to 5, wherein
the control executed by the control means includes control for switching from connection between the terminal that has transmitted the information and the another apparatus with which the terminal has not been capable of communicating to connection between the terminal and a second another apparatus different from the another apparatus in response to reception of the information by the reception means.

8. The base station apparatus according to any one of claims 1 to 7, wherein
the notification related to the permitted period is related to a permitted value of at least one of a period between a start of a connection attempt and an establishment of connection between a terminal included among the one or more terminals and the another apparatus in the second system, and a period in which the terminal and the another apparatus have not been capable of communicating with each other.

9. The base station apparatus according to any one of claims 1 to 8, wherein
the notification related to the permitted period is related to a permitted value of the number of attempts for at least one of an establishment of connection and communication between a terminal included among the one or more terminals and the another apparatus in the second system.

10. A communication apparatus that is included among one or more communication apparatuses and included in a wireless communication system that includes a base station apparatus and the one or more communication apparatuses, the one or more communication apparatuses being capable of connecting to the base station apparatus in a first system and connecting to another apparatus in a second system, the communication apparatus comprising:
obtainment means for obtaining, from the base station apparatus, information related to a permitted period related to communication with the another apparatus in the second system;
determination means for determining whether communication with the another apparatus in the second system has failed based on the information related to the permitted period; and
transmission means for, when it is determined that the communication with the another apparatus in the second system has failed, transmitting information indicating that the communication with the another apparatus has failed to the base station apparatus, wherein
the base station apparatus controls connection of the communication apparatus in the second system based on the information transmitted from the transmission means.

11. A control method for a base station apparatus in a wireless communication system that includes the base station apparatus and one or more terminals capable of connecting to the base station apparatus in a first system and connecting to another apparatus in a second system, the control method comprising:
transmitting, to the one or more terminals, a notification related to a permitted period for connecting to the another apparatus in the second system, the transmitting being executed by transmission means;
when a terminal included among the one or more terminals has not been capable of communicating with the another apparatus in the second system over a term related to the permitted period, receiving information indicating that the terminal has not been capable of performing communication in the second system from the terminal, the receiving being executed by reception means; and
in response to reception of the information from the terminal included among the one or more terminals, controlling connection of the terminal in the second system, the controlling being executed by control means.

12. A control method for a communication apparatus that is included among one or more communication apparatuses and included in a wireless communication system that includes a base station apparatus and the one or more communication apparatuses, the one or more communication apparatuses being capable of connecting to the base station apparatus in a first system and connecting to another apparatus in a second system, the communication apparatus comprising:
obtaining, from the base station apparatus, information indicating a permitted period for connecting to the another apparatus in the second system, the obtaining being executed by obtainment means;
determining whether communication with the another apparatus in the second system has failed over a term related to the permitted period, the determining being executed by determination means; and
when the communication with the another apparatus in the second system has failed over the term related to the permitted period, transmitting information indicating that the communication with the another apparatus has failed to the base station apparatus, the transmitting being executed by transmission means, wherein
the base station apparatus controls connection of the communication apparatus in the second system based on the information transmitted in the transmitting.

13. A program for causing a computer provided for a base station apparatus to execute the following, the base station apparatus being included in a wireless communication system that includes the base station apparatus and one or more terminals capable of connecting to the base station apparatus in a first system and connecting to another apparatus in a second system:
transmitting, to the one or more terminals, a notification related to a permitted period for connecting to the another apparatus in the second system;
when a terminal included among the one or more terminals has not been capable of communicating with the another apparatus in the second system over a term related to the permitted period, receiving information indicating that the terminal has not been capable of performing communication in the second system from the terminal; and
in response to reception of the information from the terminal included among the one or more terminals, controlling connection of the terminal in the second system.

14. A program for causing a computer provided for a communication apparatus to execute the following, the communication apparatus being included among one or more communication apparatuses and included in a wireless communication system that includes a base station apparatus and the one or more communication apparatuses, the one or more communication apparatuses being capable of connecting to the base station apparatus in a first system and connecting to another apparatus in a second system:
obtaining, from the base station apparatus, information indicating a permitted period for connecting to the another apparatus in the second system;
determining whether communication with the another apparatus in the second system has failed over a term related to the permitted period; and
when the communication with the another apparatus in the second system has failed over the term related to the permitted period, transmitting information indicating that the communication with the another apparatus has failed to the base station apparatus, wherein
the base station apparatus controls connection of the communication apparatus in the second system based on the information transmitted in the transmitting.
